# EUROPÄISCHE PATENTSCHRIFT

(11) **EP 2 562 442 B1**
(45) Veröffentlichungstag und Bekanntmachung des Hinweises auf die Patenterteilung: **09.07.2014**
(21) Anmeldenummer: 12002721.4
(22) Anmeldetag: 19.04.2012
(51) Int. Cl.: F16H 3/089, F16H 37/04, F16H 47/02, F16H 47/04, B60K 17/16, B60K 17/28, B60K 17/346, B60K 6/547, B60K 17/08, B60K 17/10, B60K 17/356, B60K 6/48, B60K 6/485, B60K 6/52

(54) **Schaltgetriebe, insbesondere für einen Antriebsstrang in Kraftfahrzeugen, Schienenfahrzeugen oder dergleichen**
Gearbox, in particular for a powertrain in motor vehicles, rail vehicles or similar
Boîte de vitesse, en particulier pour une chaîne de transmission dans des véhicules automobiles, des véhicules sur rail ou analogues

(30) Priorität: 24.08.2011 DE 102011111751
(43) Veröffentlichungstag der Anmeldung: 27.02.2013
(73) Patentinhaber: MAN Truck & Bus AG, 80995 München (DE)
(72) Erfinder: Schlosser, Rupert, 80935 München (DE)

(56) Entgegenhaltungen:
- DE-A1-102006 038 093
- FR-A- 1 339 113
- FR-A1- 2 689 458
- GB-A- 700 382
- GB-A- 780 106
- JP-A- 2001 280 453
- JP-A- 2003 090 395
- SU-A2- 1 765 035
- US-A- 2 821 868
- US-A- 5 993 350
- US-A1- 2002 040 818
- US-A1- 2005 164 827
- US-A1- 2011 172 049

## Beschreibung

Die vorliegende Erfindung betrifft ein Schaltgetriebe, insbesondere für einen Antriebsstrang in Kraftfahrzeugen, Schienenfahrzeugen oder dergleichen, gemäß dem Oberbegriff des Patentanspruchs 1. Ein solches Schaltgetriebe ist aus der GB 700,382 bekannt.

Die Erfindung geht aus von gattungsgemäßen Schaltgetrieben der Zwei-Wellen-Bauart, die in der Regel ein Eingangselement - den Anschluss der Eingangswelle zum Beispiel über eine Trennkupplung an das Antriebsaggregat - und ein Abtriebselement, zum Beispiel einen Abtriebsflansch zum Anschluss einer Kardanwelle - aufweisen. Sind Nebenabtriebe oder zum Beispiel ein Antrieb einer zweiten Achse des Kraftfahrzeugs vorzusehen, werden diese meist durch weitere Getriebewellen und/oder komplizierte Zusatztriebe verwirklicht. Daraus resultiert, dass für verschiedene Fahrzeugtypen und/oder Betriebsbedingungen unterschiedliche Getriebe vorgehalten werden müssen.

Aufgabe der Erfindung ist es, ein Schaltgetriebe der Zwei-Wellen-Bauart anzugeben, das ohne größere, konstruktive Änderungen vielfach einsetzbar ist, zum Beispiel für leichte Nutzfahrzeuge, PKW's, Pick-Ups, Geländefahrzeuge, Allrad-PKWs, Hybridfahrzeuge, etc.

Die Lösung dieser Aufgabe gelingt mit den Merkmalen des Patentanspruchs 1. Vorteilhafte und besonders zweckmäßige Weiterbildungen der Erfindung sind in den Unteransprüchen angeführt.

Erfindungsgemäß wird vorgeschlagen, dass beide Wellen des Schaltgetriebes mit aus dem Getriebegehäuse herausgeführten Abtriebselementen versehen sind und somit vielfache Anwendungen und Einsatzmöglichkeiten bilden. Dies geht von einer konventionellen Verwendung mit einem Eingangselement (Anschluss zum Beispiel an eine Brennkraftmaschine) und einem Abtriebselement (Antrieb einer Achse des Kraftfahrzeugs) aus, bietet aber bei Bedarf zugleich den Anschluss eines weiteren Antriebsaggregats (zum Beispiel einer Elektromaschine) und/oder motordrehzahlabhängiger und/oder fahrzeuggeschwindigkeitsabhängiger Nebenaggregate.

In vorteilhafter Weiterbildung der Erfindung kann in eine der beiden Wellen ein in mehrere, bevorzugt zwei Übersetzungen umschaltbares Planetengetriebe integriert sein. Dies schafft ein Gruppengetriebe mit Verringerung der erforderlichen Zahnradsätze für eine bestimmte Anzahl von Vorwärtsgängen und den Rückwärtsgang. Die Gangstufen können in einer niedrigeren Gesamtübersetzung und einer höheren Gesamtübersetzung durchfahren werden. Das Planetengetriebe kann in an sich bekannter Weise von einer 1 : 1 Übersetzung (starrer Durchgang) in eine ins Schnelle oder ins Langsame wirkende Übersetzung umgeschaltet werden. Insbesondere kann das Planetengetriebe an der Eingangswelle des Schaltgetriebes im Kraftfluss vor den Getriebegängen angeordnet sein.

In vorteilhafter, weiterer Ausgestaltung der Erfindung kann an das Abtriebselement der Eingangswelle eine Hydraulikpumpe und an das eine Abtriebselement der Abtriebswelle ein Hydraulikmotor angeschlossen sein, die bei ausgelegten Getriebegängen (Neutralstellung) im hydrostatischen Fahrantrieb auf die an dem anderen Abtriebselement der Abtriebswelle angeschlossene Antriebsachse des Kraftfahrzeuges wirkt. Damit ist neben dem regulärem Betrieb des Schaltgetriebes ein hydrostatischer Antrieb gegeben, der insbesondere bei Arbeitsmaschinen wie zum Beispiel Kehrmaschinen vorteilhaft ist.

Alternativ kann an das eine Abtriebselement der Abtriebswelle eine Hydraulikpumpe angeschlossen sein, die über hydraulische Leitungen zumindest einen eine zweite Antriebsachse des Kraftfahrzeugs antreibenden Hydraulikmotor antreibt. Damit kann bei Bedarf ein kombinierter Antriebsbetrieb mit regulärem Antrieb auf die eine Achse des Kraftfahrzeugs und hydrostatischem Antrieb einer weiteren Achse (zum Beispiel für Allradantrieb) gefahren werden; es kann aber auch bei einem Nutzfahrzeug mit oder ohne Auflieger auch die Achse eines Anhängefahrzeugs (zum Beispiel Aufliegers) angetrieben werden. Die entsprechenden, hydraulischen Leitungen sind dabei über Leitungskupplungen anzuschließen.

Des Weiteren kann an das Abtriebselement der Eingangswelle ein mit der Drehzahl des Antriebsaggregats bzw. einer Brennkraftmaschine betriebener Generator zur Stromerzeugung angeschlossen sein. Dieser Generator kann zum Beispiel auch über die Abtriebswelle bzw. die Räder bei einer Bergabfahrt oder beim Bremsen angetrieben werden und/oder als Retarder bzw. Bremse benutzt werden und dabei Strom erzeugen.

Bei einem Hybridfahrzeug mit allein treibender oder zuschaltbarer Elektromaschine kann diese bevorzugt an das eine Abtriebselement der Abtriebswelle angeschlossen sein. Soll das Hybridfahrzeug zugleich mit Allradantrieb versehen sein, so kann die zusätzlich anzutreibende Achse (zum Beispiel die Vorderachse) trieblich an die Elektromaschine angeschlossen sein. Wahlweise könnte der Generator zur Stromerzeugung auch an das eine Abtriebselement der Abtriebswelle angeschlossen sein, während die Elektromaschine an das Abtriebselement der Eingangswelle angeschlossen ist. Der Vorteil wäre hier dann, dass die großen Bremskräfte direkt über die Abtriebswelle auf den Generator übertragen werden könnten.

In vorteilhafter Weiterbildung der Erfindung kann ferner die Abtriebswelle des Schaltgetriebes als Hohlwelle ausgeführt sein und auf ein in das Getriebegehäuse integriertes Ausgleichsgehäuse eines Differenzials abtreiben, dessen Ausgangselemente mit in der Hohlwelle koaxial und drehbar gelagerten und aus dem Getriebegehäuse herausgeführten Ausgleichswellen trieblich verbunden sind. Eine derartige Gestaltung bietet neben den besagten Eingangs- und Abtriebselementen zum Anschluss von Aggregaten die zusätzliche Möglichkeit einer integrierten Differenzialfunktion bei zwei oder nur einer angetriebenen Achse des Kraftfahrzeugs. Durch die koaxiale Anordnung der Ausgangswellen zu der Abtriebs-Hohlwelle ist die zwei Wellen Bauart grundsätzlich beibehalten.

Abhängig von der Einbausituation im Kraftfahrzeug kann bei einem Längseinbau des Antriebsstrangs das Differenzial als Verteilerdifferenzial wirken, dessen Ausgangswellen auf ein vorderes und ein hinteres Achsdifferenzial abtreiben, während bei einem Quereinbau des Antriebsstrangs das Differenzial als Achsdifferenzial für eine angetriebene Achse (Vorderachse oder Hinterachse) des Kraftfahrzeugs dient.

Mehrere Ausführungsbeispiele sind im Folgenden anhand der beigefügten, skizzenhaften Zeichnung näher erläutert. Es zeigen:
- Fig. 1: in vereinfachter, beispielhafter Darstellung ein für Nutzfahrzeuge bzw. Kraftfahrzeuge konzipiertes Schaltgetriebe der Zwei-Wellen-Bauart mit einer Eingangswelle, einer Abtriebswelle, fünf Zahnradsätzen und einem umschaltbaren Planetengetriebe, sowie mit an den Wellenenden angeordneten Eingangs- und Abtriebselementen;
- Fig. 2: in einer Seitenansicht eine erste Anordnung des Schaltgetriebes nach Fig. 1 in einem Antriebsstrang eines Nutzfahrzeugs mit einer antreibenden Brennkraftmaschine und Abtrieb auf die Hinterachse und mit angeschlossenen Nebenabtrieben;
- Fig. 3: eine Ansicht gemäß Fig. 2 mit einer an dem Schaltgetriebe angeschlossenen Hydraulikpumpe und einem Hydraulikmotor zur Bereitstellung eines zusätzlichen, hydrostatischen Fahrantriebs;
- Fig. 4: eine Antriebsanordnung eines Nutzfahrzeugs mit regulärem Antrieb der Hinterachse und zusätzlichem hydrostatischen Antrieb der Vorderachse über eine Hydraulikpumpe, hydraulische Leitungen und Radnabenmotoren;
- Fig. 5: wiederum in einer Seitenansicht den Antriebsstrang eines Nutzfahrzeugs mit Hybridantrieb, mit an das Schaltgetriebe angeschlossenem Generator und einer Elektromaschine als Zusatzantrieb; und
- Fig. 6: in einer Draufsicht einen alternativen Antriebsstrang eines quer eingebauten Antriebsaggregat mit einem Schaltgetriebe mit integriertem Achsdifferenzial und die betreffenden Räder antreibenden Ausgangswellen.

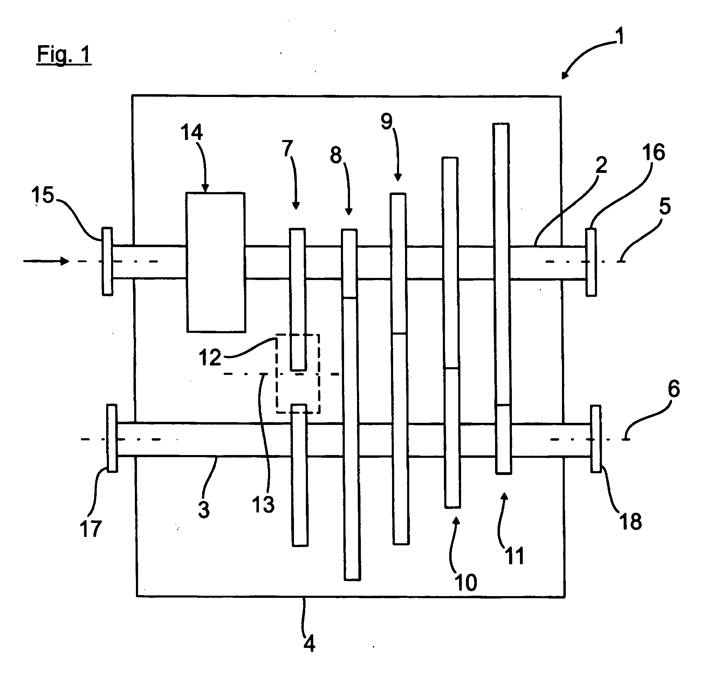

Die Fig. 1 zeigt grob schematisch ein Schaltgetriebe 1 der Zwei-Wellen-Bauart mit einer Eingangswelle 2 und einer Abtriebswelle 3, die in dem Getriebegehäuse 4 über zwei Drehachsen 5, 6 drehbar gelagert sind.

Auf der Eingangswelle 2 und der Abtriebswelle 3 sind mehrere, hier beispielhaft fünf Zahnradsätze 7 bis 11 angeordnet, die Vorwärtsgänge und wenigstens einen Rückwärtsgang bilden. Beispielweise setzen sich hier die Zahnradsätze 8 bis 11 für die Vorwärtsgänge jeweils aus Loszahnrädern und Festzahnrädern zusammen und sind über nicht dargestellte Synchronkupplungen und entsprechende Schaltvorrichtungen (Schaltgabeln, Schaltstangen, etc.) in bekannter Weise schaltbar.

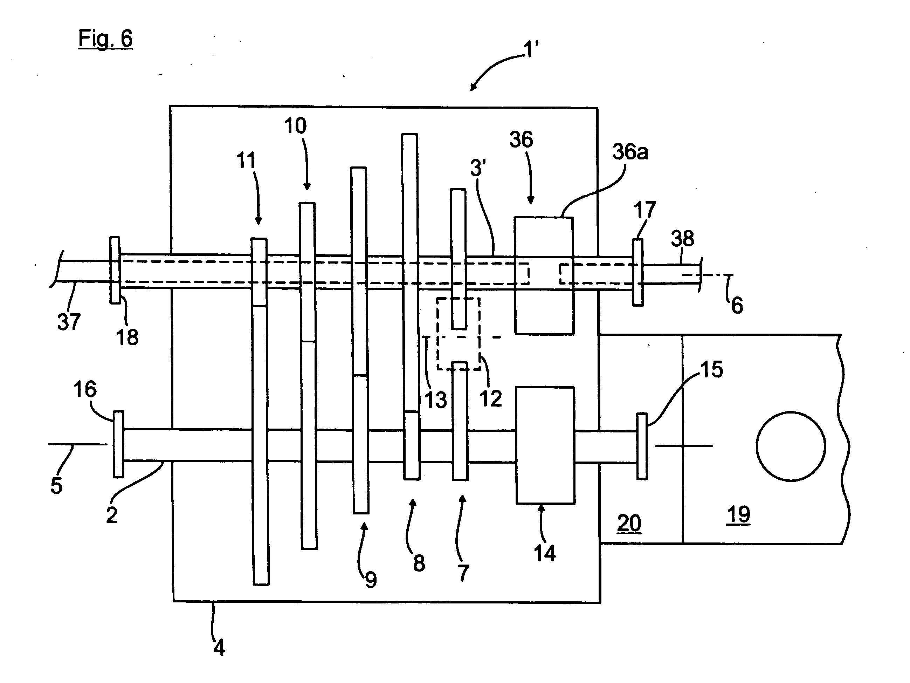

Der hier beispielhaft für den Rückwärtsgang vorgesehene Zahnradsatz 7 weist zusätzlich ein schaltbares Umkehrzahnrad 12 auf, das in dem Getriebegehäuse 4 zum Beispiel auf einer gehäusefesten Achse 13 verschiebbar gelagert ist. Es sei vorsorglich bemerkt, dass diese Achse 13 nicht zur Zwei-Wellen-Bauart zählt. Diese in Fig. 1 und Fig. 6 dargestellte Achse 13 könnte gegebenenfalls auch einen Abtrieb ausbilden, an den eine zweite Brennkraftmaschine oder ein anderer Antrieb, zum Beispiel eine Elektromaschine, angeschlossen werden könnte. In diesem Fall würde das Getriebe dann zu einem Summiergetriebe werden. Dieser weitere Antrieb könnte zum Beispiel im beladenen Zustand oder bei einer Bergfahrt eines Kraft- oder Nutzfahrzeuges hinzugeschalten werden. Im Falle eines Schienenfahrzeuges könnte das Dazuschalten bei vielen angehängten Wagons erfolgen.

Das Schaltgetriebe 1 weist hier ferner ein in das Getriebegehäuse 4 integriertes, auf der Eingangswelle 2 koaxial angeordnetes Planetengetriebe 14 auf, das über eine nicht dargestellte Schaltvorrichtung in zwei Übersetzungsstufen umschaltbar ist.

Das Planetengetriebe 14 kann entweder durch Verbinden zweier Getriebeelemente eine 1 : 1 Übersetzung oder zum Beispiel durch Festbremsen des äußeren Hohlrades eine Übersetzung ins Schnelle oder ins Langsame aufweisen. Damit ist ein Gruppengetriebe geschaffen, bei dem das im Kraftfluss vor den Zahnradsätzen 7 bis 11 positionierte Planentengetriebe 14 eine Verdoppelung der schaltbaren Übersetzungsstufen ermöglicht. Das Planetengetriebe 14 kann bevorzugt hydraulisch gesteuert sein.

Die Eingangswelle 2 des Schaltgetriebes 1 weist ein aus dem Getriebegehäuse 4 heraufgeführtes Eingangselement 15 und ein Abtriebselement 16 auf. Die Abtriebswelle 3 ist mit zwei endseitigen, herausgeführten Abtriebselementen 17 und 18 ausgeführt.

Das Eingangselement 15 und die Abtriebselemente 16, 17, 18 können als Anschlussflansche (wie gezeichnet), als Steckverzahnungen oder dergleichen ausgebildet sein und dienen wie nachstehend ausgeführt zum Anschluss von Antriebsaggregaten, Achsabtrieben oder Nebenabtrieben, insbesondere bei Nutzfahrzeugen. Funktionell gleiche Teile sind in den nachfolgend beschriebenen Figuren mit gleichen Bezugszeichen versehen.

Es versteht sich weiter, dass in der Fig. 1 selbstverständlich auch mehr oder weniger Zahnradpaare mit oder ohne umschaltbarem Planetengetriebe verbaut werden können. Insofern ist die in Fig. 1 gezeigte bevorzugte Ausführungsform als lediglich beispielhaft zu verstehen.

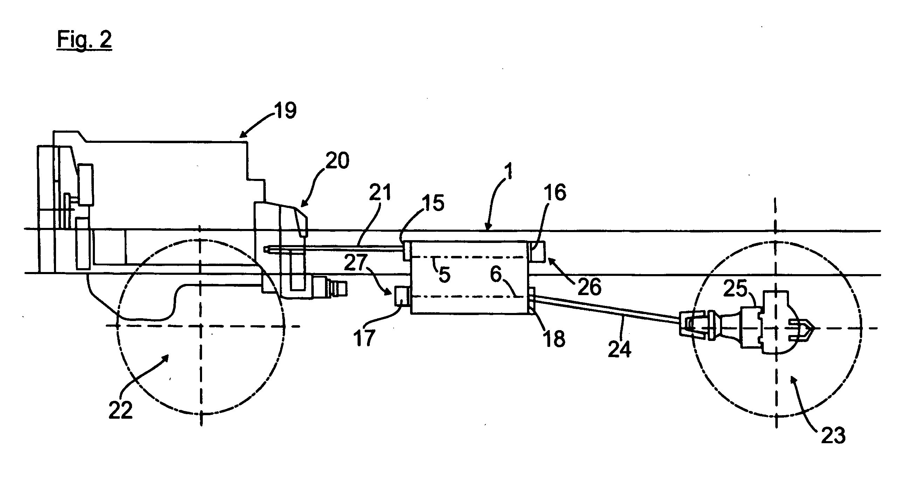

Die Fig. 2 zeigt in einer skizzenhaften Seitenansicht den Antriebsstrang eines Nutzfahrzeugs mit einer antreibenden, längseingebauten Brennkraftmaschine 19, die über eine Trennkupplung 20 und eine Gelenkwelle 21 mit dem Eingangselement 15 des Schaltgetriebes 1 trieblich verbunden ist. Auch hier soll nochmals explizit angeführt werden, dass die Darstellung in Fig. 2 lediglich beispielhaft zu verstehen ist. So ist zum Beispiel die Gelenkwelle 21 nicht zwingend erforderlich und auch ein Direktanbau des Getriebes an die Trennkupplung möglich, so dass dann die Kupplungsscheibe der Trennkupplung auf dem Eingangselement sitzt.

Das zwischen der Vorderachse 22 und der Hinterachse 23 (jeweils nur angedeutet) am Aufbau des Nutzfahrzeugs befestigte Schaltgetriebe 1 treibt über das Abtriebselement 18 an der Abtriebswelle 3 (Fig. 1) über eine Kardanwelle 24 das Achsdifferenzial 25 an der Hinterachse 23 an.

An das Abtriebselement 16 der räumlich oben liegenden Eingangswelle 2 ist ein nur angedeuteter Nebenabtrieb 26 angeschlossen, der motordrehzahlabhängig betrieben ist und beispielsweise ein elektrischer Generator, eine Hydraulikpumpe für Arbeitseinsätze oder eine Servo-Lenkung, ein Kompressor, etc. oder auch nur ein Flansch sein kann.

An das Abtriebselement 17 der räumlich unten positionierten Abtriebswelle 3 des Schaltgetriebes 1 ist ebenfalls ein Nebenabtrieb 27 angeschlossen, der dementsprechend fahrgeschwindigkeitsabhängig angekoppelt ist und beispielsweise durch einen Hydraulikmotor gebildet sein kann.

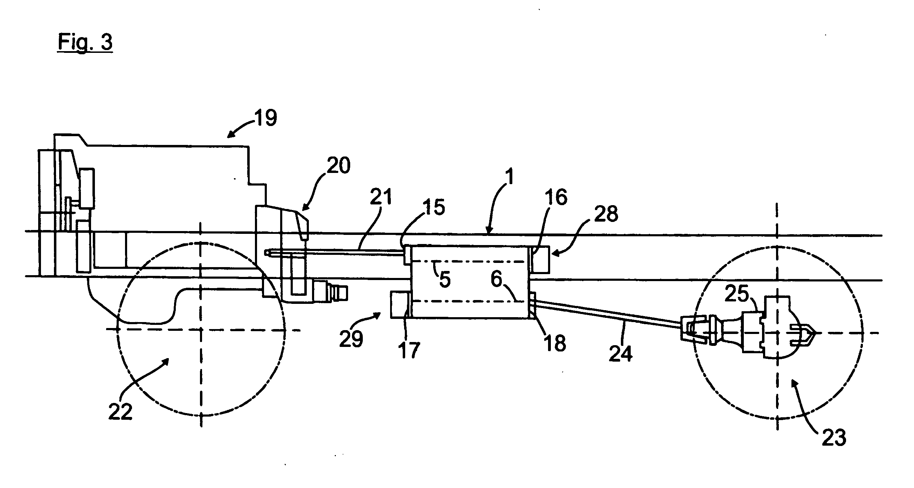

Die Fig. 3 zeigt einen Antriebsstrang eines Nutzfahrzeugs analog zur Fig. 2, der nur soweit beschrieben ist, als er sich wesentlich von der Ausführung Fig. 2 unterscheidet.

Dabei ist an das Abtriebselement 16 der Eingangswelle 2 eine Hydraulikpumpe 28 angeschlossen, die über eine nicht dargestellte, hydraulische Steuereinrichtung Hydrauliköl zu einem Hydraulikmotor 29 fördert.

Der Hydraulikmotor 29 ist an das Abtriebselement 17 der Abtriebswelle 3 angeschlossen und kann bei Bedarf diese antreiben. Ist das Schaltgetriebe 1 auf Neutral geschaltet (kein Gang eingelegt), so ist über die Hydraulikpumpe 28, die Steuereinheit (nicht dargestellt) und den Hydraulikmotor 29 ein hydrostatischer Fahrantrieb geschaffen, bei dem der Hydraulikmotor 29 über die Abtriebswelle 3, die Kardanwelle 24 und das Achsdifferenzial 25 die Hinterachse 23 antreibt.

Ein solcher hydrostatischer Fahrantrieb ist zum Beispiel für Kehrmaschinen vorteilhaft und kann über die hydraulische Steuereinheit stufenlos vorwärts oder rückwärts betrieben werden. Ein weiteres Beispiel ist das Randstreifenmähen bzw. Mulchen, wo der Fahrzeugmotor bei gleichmäßiger Drehzahl das Mähgerät antreibt und je nach Höhe des Grases mit dem hydrostatischen Antrieb langsamer oder schneller gefahren werden kann.

Alternativ kann über das Schaltgetriebe 1 der reguläre Fahrbetrieb mit Schalten der Vorwärtsgänge und des Rückwärtsganges ausgeführt werden.

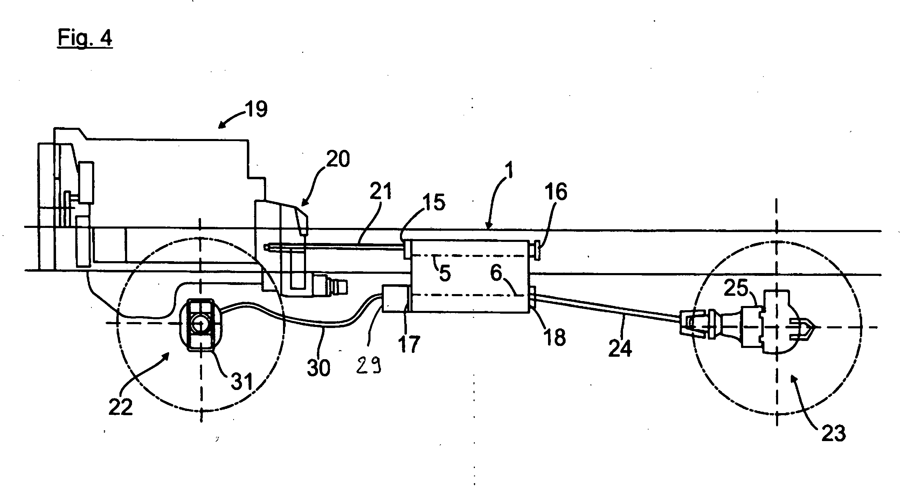

Die Fig. 4 zeigt ein Ausführungsbeispiel der Erfindung, bei dem das Nutzfahrzeug an der Vorderachse 22 und an der Hinterachse 23 antreibbar ist.

Dabei erfolgt der Antrieb, wie vorbeschrieben, über die Gelenkwelle 21, das Eingangselement 15 des Schaltgetriebes 1, die Eingangswelle 2 und die Abtriebswelle 3 auf das Abtriebselement 18 und schließlich über die Kardanwelle 24 und das Achsdifferenzial 25 auf die Hinterachse 23.

Eine über das zweite Ausgangselement 17 der Abtriebswelle 3 angeschlossene Hydraulikpumpe 29 treibt über hydraulische Leitungen 30 (nur angedeutet) und wiederum über eine hydraulische Steuereinheit (nicht dargestellt) hydraulische Radnabenmotoren 31 an den beiden Rädern der Vorderachse 22 des Nutzfahrzeugs an. Wenn allerdings die Hydraulikpumpe 29 auf die Radnabenmotoren abgestimmt ist, könnte die hydraulische Steuereinheit gegebenenfalls auch entfallen.

Damit ist ein zuschaltbarer Allradantrieb geschaffen, bei dem im aktivierten Zustand die über die Abtriebswelle 3 und den Hydraulikmotor 29 mit Hydrauliköl beaufschlagten Radnabenmotoren 31 hydrostatisch die Vorderachse 22 antreiben (zum Beispiel in einem unbefestigten Gelände). Über die nicht dargestellte, hydraulische Steuereinheit kann der hydrostatische Antrieb bei Nichtbedarf (zum Beispiel im Straßenbetrieb) abgeschaltet werden. Eine Verbindung der Abtriebswelle 3 mit dem Hydraulikmotor 29 könnte gegebenenfalls auch durch eine Klauenkupplung realisiert werden.

Weiter könnte die Vorderachse gegebenenfalls auch über eine Gelenkwelle zwischen dem Ausgangselement 17 und der Vorderachse bzw. des Achsdifferenziales angetrieben werden. Die Gelenkwelle kann trennbar oder untrennbar an der Abtriebswelle angebracht sein. Alternativ könnte auch eine Viscosperre mit einer definierten Sperrwirkung, zum Beispiel von 25 bis 35%, vorgesehen sein.

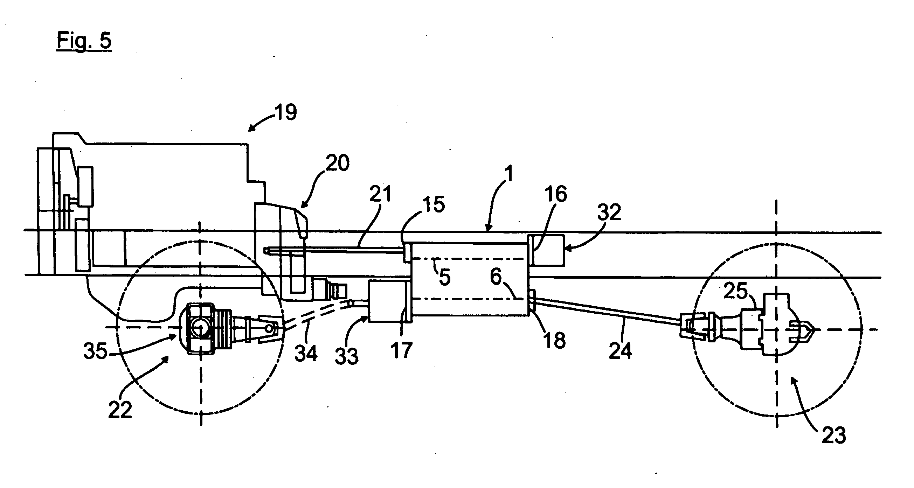

In der Fig. 5 ist ein Nutzfahrzeug mit Hybridantrieb dargestellt, bei dem an das Abtriebselement 16 der Eingangswelle 2 des Schaltgetriebes 1 ein elektrischer Generator 32 angeschlossen ist, der mit der Drehzahl der antreibenden Brennkraftmaschine 19 betrieben ist.

Der Generator 32 versorgt das elektrische Bordnetz des Nutzfahrzeugs mit gegebenenfalls vorgesehenen Traktionsbatterien (nicht dargestellt) mit Betriebsstrom.

Des Weiteren ist an das vordere Ausgangselement 17 der Abtriebswelle 3 des Schaltgetriebes 1 eine Elektromaschine 33 angeschlossen, die im aktivierten Zustand die Abtriebswelle 3 und damit verbunden die Hinterachse 23 antreibt. Die Elektromaschine 33 kann kurzfristig das Nutzfahrzeug elektrisch antreiben oder in einem Boostbetrieb zur Brennkraftmaschine 19 dazu geschaltet werden.

Alternativ dazu kann in der Fig. 5 das Bezugszeichen 32 auch eine Elektromaschine bezeichnen, während das Bezugszeichen 33 dann einen Generator bezeichnet. Bei dieser Variante werden dann die großen Bremskräfte direkt über die Abtriebswelle 3 auf den Generator übertragen.

Der soweit beschriebene Antriebsstrang kann auch mit Antrieb der Vorderachse 22 und der Hinterachse 23 ausgeführt sein. Dazu ist an die Elektromaschine 33 eine gestrichelt angedeutete Gelenkwelle 34 angeschlossen, die ein vorderes Achsdifferenzial 35 antreibt. Ferner kann im Schaltgetriebe 1 bzw. in die Abtriebswelle 3 ein Verteilerdifferenzial 36 integriert sein, wie es anhand der Fig. 6 nachstehend beschrieben ist.

Die Fig. 6 zeigt eine von den Fig. 1 bis 5 abweichende Ausgestaltung eines Antriebsstrangs für Kraftfahrzeuge, bei dem das Schaltgetriebe 1' und die Brennkraftmaschine 19 quer zur Längsachse des Kraftfahrzeugs und im Bereich der Vorderachse (nicht dargestellt) bzw. der Hinterachse bei einem Fahrzeug mit Heckmotor eingebaut und unmittelbar zusammengeflanscht sind.

Die Brennkraftmaschine 19 treibt wiederum über eine Trennkupplung 20 und das Eingangselement 15 (zum Beispiel eine Steckverzahnung) die Eingangswelle 2 des Schaltgetriebes 1' an, auf der das vorbeschriebene Planetengetriebe 14 angeordnet ist.

Die Abtriebswelle 3' ist durch eine im Getriebegehäuse 4 drehbar gelagerte Hohlwelle gebildet. Zwischen der Abtriebswelle 3' und der Eingangswelle 2 sind die Zahnradsätze 7 bis 11 zur Bildung der Vorwärtsgänge und des Rückwärtsganges wie vorbeschrieben angeordnet.

Die Abtriebswelle 3' ist mit einem Ausgleichsgehäuse 36a eines als Achsdifferenzial der Vorderachse bzw. der Hinterachse des Kraftfahrzeugs ausgelegten Differenzial 36 trieblich verbunden.

Über das Ausgleichsgehäuse 36a werden die Ausgangselemente (zum Beispiel Achskegelräder) des Differenzials 36 angetrieben, die trieblich mit innerhalb der hohlen Abtriebswelle 3' gelagerten, aus dem Getriebegehäuse 4 herausgeführten Ausgangswellen 37, 38 verbunden sind. Die Ausgangswellen 37, 38 treiben in nicht dargestellter Weise über Antriebsgelenkwellen die vorderen Räder bzw. die hinteren Räder bei einem Heckmotor des Kraftfahrzeugs an.

Das Achsdifferenzial 36 kann in bekannter Weise ein Kegelraddifferenzial oder ein als Planetengetriebe ausgeführtes Differenzial sein.

In Ausführungsbeispiel gemäß Fig. 5 kann das Differenzial 36 im Längseinbau des Schaltgetriebes 1 als Verteilerdifferenzial wirken, wobei die Ausgangswellen 37, 38 dann auf die Gelenkwelle 34 und die Kardanwelle 24 abtreiben und die entsprechend modifizierte Elektromaschine 33 (Hohlwellenbauart) über das Abtriebselement 17 auf die hohle Abtriebswelle 3' geschaltet ist.

### Bezugszeichenliste

- 1: Schaltgetriebe
- 2: Eingangswelle
- 3: Abtriebswelle
- 4: Getriebegehäuse
- 5, 6: Drehachsen
- 8, 9, 10, 11: Vorwärtsgang-Zahnradsätze
- 7: Rückwärtsgang-Zahnradsatz
- 12: Umkehr Zahnrad
- 13: Drehachse
- 14: Planetengetriebe
- 15: Eingangselement
- 16, 17, 18: Abtriebselemente
- 19: Brennkraftmaschine
- 20: Trennkupplung
- 21: Gelenkwelle
- 22: Vorderachse
- 23: Hinterachse
- 24: Kardanwelle
- 25: Achsdifferenzial
- 26, 27: Nebenabtriebe
- 28: Hydraulikpumpe
- 29: Hydraulikmotor
- 30: Hydraulikleitungen
- 31: Radnabenmotoren
- 32: Generator
- 33: Elektromaschine
- 34: Gelenkwelle
- 35: Achsdifferenzial
- 36: Verteilerdifferenzial, Achsdifferenzial
- 37, 38: Ausgangswellen

## Patentansprüche

1. Schaltgetriebe (1;1'), insbesondere für einen Antriebsstrang in Kraftfahrzeugen, Schienenfahrzeugen oder dergleichen, das in Zwei-Wellen-Bauart wenigstens einen Vorwärtsgang und zumindest einen Rückwärtsgang aufweist, wobei die Wellen (2, 3; 2, 3'), die in einem Getriebegehäuse (4) des Schaltgetriebes (1,1') drehbar gelagert sind, schaltbare Zahnradsätze (7, 8, 9, 10, 11) tragen, die über Schaltkupplungen alternierend schaltbar sind, wobei eine Welle als Eingangswelle (2) ein antreibendes Eingangselement (15) und die andere Welle als Abtriebswelle (3; 3') ein aus dem Getriebegehäuse (4) herausgeführtes Abtriebselement (17,18) aufweist, **dadurch gekennzeichnet, dass** beide Wellen (2, 3; 2, 3') mit aus dem Getriebegehäuse (4) herausgeführten Abtriebselementen (16, 17, 18) versehen sind dergestalt, dass die Eingangswelle (2) ein aus dem Getriebegehäuse (4) herausgeführtes Eingangselement (15) und ein aus dem Getriebegehäuse (4) herausgeführtes Abtriebselement (16) aufweist, und dass die Abtriebswelle (3; 3') mit zwei endseitigen, aus dem Getriebegehäuse (4) herausgeführten Abtriebselementen (17, 18) ausgeführt ist, so dass an dem Eingangselement (15) und an den Abtriebselementen (16, 17, 18) Antriebsaggregate, Achsabtriebe oder Nebenabtriebe anschließbar sind.

2. Schaltgetriebe nach Anspruch 1, **dadurch gekennzeichnet, dass** in eine der beiden Wellen (2, 3) ein in mehrere, vorzugsweise zwei Übersetzungen umschaltbares Planetengetriebe (14) integriert ist.

3. Schaltgetriebe nach Anspruch 2, **dadurch gekennzeichnet, dass** das Planetengetriebe (14) an der Eingangswelle (2) im Kraftfluss vor den Zahnradsätzen (7 bis 11) angeordnet ist.

4. Schaltgetriebe nach einem der vorhergehenden Ansprüche, **dadurch gekennzeichnet, dass** an das Abtriebselement (16) der Eingangswelle (2) eine Hydraulikpumpe (28) und an das eine Abtriebselement (17) der Abtriebswelle (3) ein Hydraulikmotor (29) angeschlossen ist, die bei ausgelegten Zahnradsätzen (7 bis 11) im hydrostatischen Fahrantrieb auf eine Antriebsachse (25) des Kraftfahrzeuges wirken können.

5. Schaltgetriebe nach einem der vorhergehenden Ansprüche 1 bis 3, **dadurch gekennzeichnet, dass** an das eine Abtriebselement (17) der Abtriebswelle (3) eine Hydraulikpumpe (28) angeschlossen ist, die über hydraulische Leitungen (30) zumindest einen, eine zweite Antriebsachse (22) des Kraftfahrzeugs antreibenden Hydraulikmotor (31) antreiben kann.

6. Schaltgetriebe nach einem der vorhergehenden Ansprüche 1 bis 3, **dadurch gekennzeichnet, dass** an das Abtriebselement (16) der Eingangswelle (2) ein Generator (32) zur Stromerzeugung angeschlossen ist.

7. Schaltgetriebe nach einem der Ansprüche 1 bis 3, **dadurch gekennzeichnet, dass** an das eine Abtriebselement der Abtriebswelle ein Generator zur Stromerzeugung angeschlossen ist, und
dass an das Abtriebselement der Eingangswelle eine Elektromaschine angeschlossen ist.

8. Schaltgetriebe nach einem der vorhergehenden Ansprüche 1 bis 3 oder 6, **dadurch gekennzeichnet, dass** an das eine Abtriebselement (17) der Abtriebswelle (3) eine bei Bedarf antreibende Elektromaschine (33) angeschlossen ist.

9. Schaltgetriebe nach einem der vorhergehenden Ansprüche, **dadurch gekennzeichnet, dass** die Abtriebswelle (3') als Hohlwelle ausgeführt ist und auf ein in das Getriebegehäuse (4) integriertes Ausgleichsgehäuse (36a) eines Differenzials (36) abtreibt, dessen Ausgangselemente mit in der Hohlwelle koaxial und drehbar gelagerten und aus dem Getriebegehäuse (4) herausgeführten Ausgangswellen (37, 38) trieblich verbunden sind.

10. Schaltgetriebe nach Anspruch 9, **dadurch gekennzeichnet, dass** bei einem Längseinbau des Antriebsstrangs des Kraftfahrzeugs das Differenzial (36) als Verteilerdifferenzial wirkt, dessen Ausgangswellen (37, 38) auf ein vorderes und ein hinteres Achsdifferenzial (25, 35) abtreiben können.

11. Schaltgetriebe nach Anspruch 9, **dadurch gekennzeichnet, dass** bei einem Quereinbau des Antriebsstrangs des Kraftfahrzeuges das Differenzial (36) als Achsdifferenzial für eine der angetriebenen Achsen (22) des Kraftfahrzeugs dient.

12. Kraftfahrzeug, insbesondere Nutzfahrzeug, mit einem Schaltgetriebe nach einem der vorhergehenden Ansprüche.

## Claims

1. A change-speed gearbox (1; 1'), in particular for a drive train in motor vehicles, rail vehicles or the like, which change-speed gearbox (1; 1') has, in the two-shaft design, at least one forward gear and at least one reverse gear, the shafts (2, 3; 2', 3') which are mounted rotatably in a gearbox housing (4) of the change-speed gearbox (1; 1')supporting shiftable gearwheel sets (7, 8, 9, 10, 11) which can be shifted via shifting clutches in an alternating manner, one shaft having, as input shaft (2), a driving input element (15) and the other shaft having, as output shaft (3; 3'), an output element (17, 18) which is guided out of the gearbox housing (4), **characterized in that** both shafts (2, 3; 2', 3') are provided with output elements (16, 17, 18) which are guided out of the gearbox housing (4), in such a way that the input shaft (2) has an input element (15) which is guided out of the gearbox housing (4) and an output element (16) which is guided out of the gearbox housing (4), and **in that** the output shaft (3; 3') is configured with two end-side output elements (17, 18) which are guided out of the gearbox housing (4), with the result that drive assemblies, axle outputs or auxiliary outputs can be connected at the input element (15) and at the output elements (16, 17, 18).

2. The change-speed gearbox according to Claim 1, **characterized in that** a planetary gear mechanism (14) which can be switched over into a plurality of, preferably two, transmission ratios is integrated into one of the two shafts (2, 3).

3. The change-speed gearbox according to Claim 2, **characterized in that** the planetary gear mechanism (14) is arranged on the input shaft (2) upstream of the gearwheel sets (7 to 11) in the force flow.

4. The change-speed gearbox according to one of the preceding claims, **characterized in that** a hydraulic pump (28) is connected to the output element (16) of the input shaft (2) and a hydraulic motor (29) is connected to one output element (17) of the output shaft (3), which hydraulic pump (28) and hydraulic motor (29) can act on a drive axle (25) of the motor vehicle in the case of disconnected gearwheel sets (7 to 11) in the hydrostatic traction drive.

5. The change-speed gearbox according to one of the preceding Claims 1 to 3, **characterized in that** a hydraulic pump (28) is connected to one output element (17) of the output shaft (3), which hydraulic pump (28) can drive, via hydraulic lines (30), at least one hydraulic motor (31) which drives a second drive axle (22) of the motor vehicle.

6. The change-speed gearbox according to one of the preceding Claims 1 to 3, **characterized in that** a generator (32) for power generation is connected to the output element (16) of the input shaft (2).

7. The change-speed gearbox according to one of Claims 1 to 3, **characterized in that** a generator for power generation is connected to one output element of the output shaft, and **in that** an electric machine is connected to the output element of the input shaft.

8. The change-speed gearbox according to one of the preceding Claims 1 to 3 or 6, **characterized in that** an electric machine (33) which drives if required is connected to one output element (17) of the output shaft (3).

9. The change-speed gearbox according to one of the preceding claims, **characterized in that** the output shaft (3') is configured as a hollow shaft and outputs to a differential case (36a) of a differential (36), which differential case (36a) is integrated into the gearbox housing (4), the output elements of which differential (36) are drive-connected to output shafts (37, 38) which are mounted coaxially and rotatably in the hollow shaft and are guided out of the gearbox housing (4).

10. The change-speed gearbox according to Claim 9, **characterized in that**, in the case of a longitudinal installation of the drive train of the motor vehicle, the differential (36) acts as a power divider differential, the output shafts (37, 38) of which can output to a front and a rear axle differential (25, 35).

11. The change-speed gearbox according to Claim 9, **characterized in that**, in the case of a transverse installation of the drive train of the motor vehicle, the differential (36) serves as an axle differential for one of the driven axles (22) of the motor vehicle.

12. A motor vehicle, in particular a commercial vehicle, having a change-speed gearbox according to one of the preceding claims.

## Revendications

1. Boîte de vitesses (1 ; 1'), en particulier pour une chaîne de transmission dans des véhicules automobiles, des véhicules ferroviaires ou similaires, qui présente dans une construction à deux arbres au moins un rapport de marche avant et au moins un rapport de marche arrière, les arbres (2, 3 ; 2, 3'), qui sont montés à rotation dans un boîtier de transmission (4) de la boîte de vitesses (1 ; 1'), portant des jeux de roues dentées commutables (7, 8, 9, 10, 11), qui peuvent être commutés en alternance par le biais d'embrayages de changement de vitesses, un arbre présentant, en tant qu'arbre d'entrée (2), un élément d'entrée d'entraînement (15) et l'autre arbre présentant, en tant qu'arbre de prise de force (3 ; 3'), un élément de prise de force (17, 18) guidé hors du boîtier de transmission (4), **caractérisée en ce que** les deux arbres (2, 3 ; 2, 3') sont pourvus d'éléments de prise de force (16, 17, 18) guidés hors du boîtier de transmission (4) de telle sorte que l'arbre d'entrée (2) présente un élément d'entrée (15) guidé hors du boîtier de transmission (4) et un élément de prise de force (16) guidé hors du boîtier de transmission (4), et **en ce que** l'arbre de prise de force (3 ; 3') est réalisé avec deux éléments de prise de force du côté de l'extrémité, guidés hors du boîtier de transmission (4), de sorte que des unités d'entraînement, des prises de force d'essieu ou des prises de force secondaires puissent être raccordées à l'élément d'entrée (15) et aux éléments de prise de force (16, 17, 18).

2. Boite de vitesses selon la revendication 1, **caractérisée en ce que** dans l'un des deux arbres (2, 3) est intégré un engrenage planétaire (14) pouvant être commuté suivant plusieurs, de préférence suivant deux, démultiplications.

3. Boîte de vitesses selon la revendication 2, **caractérisée en ce que** l'engrenage planétaire (14) est disposé au niveau de l'arbre d'entrée (2) dans le flux de forces avant les jeux de roues dentées (7 à 11).

4. Boîte de vitesses selon l'une quelconque des revendications précédentes, **caractérisée en ce qu'**une pompe hydraulique (28) est raccordée à l'élément de prise de force (16) de l'arbre d'entrée (2) et un moteur hydraulique (29) est raccordé à l'un des éléments de prise de force (17) de l'arbre de prise de force (3), lesquels, lorsque les jeux de roues dentées (7 à 11) ne sont pas engrenés, peuvent agir sur un essieu d'entraînement (25) du véhicule automobile en mode d'entraînement de conduite hydrostatique.

5. Boîte de vitesses selon l'une quelconque des revendications précédentes 1 à 3, **caractérisée en ce qu'**au niveau de l'un des éléments de prise de force (17) de l'arbre de prise de force (3) est raccordée une pompe hydraulique (28), laquelle peut entraîner, par le biais de conduites hydrauliques (30), au moins un moteur hydraulique (31) entraînant un deuxième essieu d'entraînement (22) du véhicule automobile.

6. Boîte de vitesses selon l'une quelconque des revendications précédentes 1 à 3, **caractérisée en ce qu'**un générateur (32) est raccordé à l'élément de prise de force (16) de l'arbre d'entrée (2) en vue de la génération de courant.

7. Boîte de vitesses selon l'une quelconque des revendications 1 à 3, **caractérisée en ce qu'**un générateur pour la génération de courant est raccordé à l'un des éléments de prise de force de l'arbre de prise de force, et
**en ce qu'**une machine électrique est raccordée à l'élément de prise de force de l'arbre d'entrée.

8. Boîte de vitesses selon l'une quelconque des revendications précédentes 1 à 3 ou 6, **caractérisée en ce qu'**une machine électrique (33), entraînant au besoin, est raccordée à l'un des éléments de prise de force (17) de l'arbre de prise de force (3).

9. Boite de vitesses selon l'une quelconque des revendications précédentes, **caractérisée en ce que** l'arbre de prise de force (3') est réalisé sous forme d'arbre creux et réalise la prise de force sur un boîtier d'équilibrage (36a), intégré dans le boîtier de transmission (4), d'un différentiel (36) dont les éléments de sortie sont connectés par entraînement avec des arbres de sortie (37, 38) montés coaxialement et à rotation dans l'arbre creux et guidés hors du boîtier de transmission (4).

10. Boite de vitesses selon la revendication 9, **caractérisée en ce que** dans le cas d'une installation longitudinale de la chaîne de transmission du véhicule automobile, le différentiel (36) agit en tant que différentiel répartiteur dont les arbres de sortie ( 37, 38) peuvent réaliser la prise de force sur un différentiel d'essieu avant et un différentiel d'essieu arrière (25, 35).

11. Boîte de vitesses selon la revendication 9, **caractérisée en ce que** dans le cas d'une installation transversale de la chaîne de transmission de véhicule automobile, le différentiel (36) sert de différentiel d'essieu pour l'un des essieux entraînés (22) du véhicule automobile.

12. Véhicule automobile, en particulier véhicule utilitaire, comprenant une boîte de vitesses selon l'une quelconque des revendications précédentes.
